Europäisches Patentamt

European Patent Office

Office européen des brevets

(19)

(11) EP 0 697 999 B1

(12) FASCICULE DE BREVET EUROPEEN

(45) Date de publication et mention
de la délivrance du brevet:
25.11.1998 Bulletin 1998/48

(51) Int Cl.⁶: **C02F 1/20**, C02F 1/70,
B01J 23/42, B01J 21/18

(21) Numéro de dépôt: 95912292.0

(22) Date de dépôt: 10.03.1995

(86) Numéro de dépôt international:
PCT/FR95/00276

(87) Numéro de publication internationale:
WO 95/24360 (14.09.1995 Gazette 1995/39)

(54) **PROCEDE DE DESOXYGENATION CATALYTIQUE POUSSEE DE L'EAU DE MER**

VERFAHREN ZUR WEITERGEHENDEN KATALYTISCHEN DESOXYDIERUNG VON
MEERWASSER

METHOD FOR FORCED CATALYTIC DEOXYGENATION OF SEA WATER

(84) Etats contractants désignés:
AT BE CH DE DK ES FR GB GR IE IT LI LU MC NL
PT SE

(30) Priorité: 11.03.1994 FR 9402832

(43) Date de publication de la demande:
28.02.1996 Bulletin 1996/09

(73) Titulaire: ELF AQUITAINE PRODUCTION
92400 Courbevoie (FR)

(72) Inventeurs:
• BOUSQUET, Jacques
F-69540 Irigny (FR)
• BARBIER, Jacques
F-86360 Montanise (FR)
• VOLLE, Jean-Luc
F-31600 Muret (FR)

(74) Mandataire: Boillot, Marc
Elf Exploration Production
Département Propriété Industrielle
Tour Elf
EP/T/RD/DPI - Bureau 34 G 47
92078 Paris La Défense Cedex (FR)

(56) Documents cités:
EP-A- 0 106 729          EP-A- 0 316 569

Il est rappelé que: Dans un délai de neuf mois à compter de la date de publication de la mention de la délivrance du
brevet européen, toute personne peut faire opposition au brevet européen délivré, auprès de l'Office européen des
brevets. L'opposition doit être formée par écrit et motivée. Elle n'est réputée formée qu'après paiement de la taxe
d'opposition. (Art. 99(1) Convention sur le brevet européen).

## Description

L'invention se rapporte à un procédé de désoxygénation catalytique poussée d'eaux de provenances diverses et tout particulièrement de l'eau de mer.

Le maintien en pression des gisements d'huile, notamment gisements marins, ou/et la récupération améliorée de celle-ci conduisent les producteurs de pétrole en mer à injecter de l'eau de mer dans le gisement en cours d'exploitation. Un tel processus impose que cette eau soit traitée avant injection dans le gisement. C'est la raison pour laquelle on procède généralement tout d'abord à un traitement bactéricide par chloration, puis à une filtration en plusieurs étapes de façon à éliminer toute matière en suspension qui pourrait entraîner d'éventuels colmatages dans le dispositif d'injection de cette eau de mer ainsi que dans le gisement et dans les puits de production. Enfin, il faut procéder à une désoxygénation poussée de l'eau de mer après filtration, sans quoi des risques de corrosion très importants sont à craindre pour l'installation avec les conséquences financières que l'on peut imaginer.

Pour mettre en oeuvre la désoxygénation précitée de l'eau de mer, les techniques utilisées conventionnellement sont le strippage par les gaz exempts d'oxygène ou la mise sous pression réduite. Ces deux techniques sont aujourd'hui prouvées et performantes car elles permettent d'atteindre sans difficulté une teneur résiduelle en oxygène dans l'eau de mer traitée qui est de l'ordre de 50 ppb (1 ppb = $1 \times 10^{-7}$ % en poids).

Ces techniques ont également quelques désavantages intrinsèques. On sait, par exemple, que le strippage au gaz acidifie toujours un peu l'eau en raison du $CO_2$ toujours présent. De plus, les traces d'huile entraînées dans le gaz de strippage, en dépit des techniques de dévésiculation les plus performantes, peuvent poser des problèmes de colmatage dans l'ensemble des installations de production. La mise en service de tours de dégazage sous vide ne présente pas ce genre de difficultés, mais a, en revanche, l'inconvénient de mettre en oeuvre des machines tournantes dont la maintenance doit être assurée et dont le fonctionnement exige la mise en place de structures particulièrement onéreuses en mer.

On sait que l'on peut éliminer l'oxygène contenu en faible concentration dans de l'eau douce par réaction in situ avec de l'hydrogène, préalablement dissous dans l'eau à traiter, en opérant au contact d'un catalyseur solide à base de palladium ou de platine dispersé sur un support solide granulaire. Ainsi la citation US-A-4 789 488 décrit un procédé de ce type pour la désoxygénation d'eaux de chaudière, qui renferment de l'ordre de 8 ppm d'oxygène à l'état dissous, en utilisant un catalyseur à base de palladium ou de platine finement divisé sur un support consistant en une résine polystyrénique échangeuse d'anions et en opérant à des températures comprises entre environ 15 °C et 40 °C.

La citation US-A-3 052 527 concerne l'élimination de l'oxygène contenu dans l'eau, par passage d'un courant de l'eau à traiter à travers un lit d'un absorbant activé consistant en palladium ou platine déposé sur du charbon actif, lequel absorbant renferme de l'hydrogène chimisorbé par maintien dudit adsorbant dans une atmosphère d'hydrogène entre deux passages d'eau à traiter au contact du lit d'adsorbant activé.

La citation EP-A-0 316 569 propose un procédé d'élimination de l'oxygène contenu dans des eaux, notamment eaux potables, par hydrogénation catalytique en présence d'un catalyseur consistant notamment en palladium ou/et en platine sur un support formé, par exemple, de charbon actif. Dans ce procédé, on pulvérise l'eau à traiter sur un lit dudit catalyseur disposé dans une zone de réaction remplie d'hydrogène, on laisse l'eau s'écouler ou ruisseler à travers le lit de catalyseur, puis on évacue l'eau traitée hors de ladite zone. Le procédé est mis en oeuvre à des températures allant de 0 °C à 100 °C et notamment à des températures voisines de l'ambiante et sous des pressions d'hydrogène allant de 1 à 10 bars et en particulier de la pression ambiante à 5 bars. La teneur pondérale globale du catalyseur en palladium et/ou platine peut aller de 0,01 % à 10 % et de préférence de 0,1 % à 5 % et la surface spécifique BET dudit catalyseur peut prendre des valeurs de 0,1 $m^2/g$ à 2 000 $m^2/g$. Le temps de séjour de l'eau à désoxygéner au contact du lit de catalyseur peut représenter 0,1 à 10 minutes et de préférence de 0,2 à 2 minutes.

On connaît également (EP-A-0106729) un catalyseur d'hydrogénation de composés organiques, qui est à base d'un métal du Groupe VIII du Tableau Périodique des Eléments, surtout palladium, présent en couche superficielle sur un support de charbon actif. Pour préparer ce catalyseur, une suspension aqueuse du support de charbon actif, préalablement traité par l'acide nitrique, est additionnée d'un liquide non miscible à l'eau, en quantité volumique au plus égale au volume poreux du support, et un composé du métal choisi est ensuite ajouté à la suspension résultante en même temps qu'une base.

Une technique d'élimination de l'oxygène contenu dans l'eau de mer par hydrogénation catalytique au contact d'un catalyseur solide présenterait un intérêt considérable par rapport aux techniques de strippage ou de mise sous-pression réduite car elle offrirait de nombreux avantages, notamment grande compacité de l'installation, absence de pièce tournante, pas de problème de moussage dans les colonnes ou de colmatage dans les puits. De plus, la quantité d'hydrogène nécessaire à la réaction étant très faible puisque déterminée stoechiométriquement par rapport à la teneur en oxygène à réduire, la fourniture de l'hydrogène ne poserait pas de problème particulier.

Cependant, si l'on cherche à transposer à la désoxygénation de l'eau de mer les techniques précitées de désoxygénation d'eaux douces par hydrogénation catalytique au contact d'un catalyseur à base de palladium ou/et de platine associé à un support granulaire tel que du charbon actif, les résultats obtenus sont loin d'être satisfaisants. En effet, quelle que soit la nature du support, les catalyseurs à base de palladium ne sont pas stables au contact de l'eau de mer et leur activité pour la désoxygénation chute après des durées assez courtes à l'échelle d'une mise en oeuvre industrielle. Les catalyseurs à base de platine sur support de charbon actif, qui sont disponibles commercialement, sont stables au contact de l'eau de mer. Toutefois, l'activité de ces catalyseurs pour la désoxygénation est généralement insuffisante pour obtenir une désoxygénation poussée correspondant à des teneurs résiduelles en oxygène de l'eau de mer traitée inférieures à 50 ppb.

On a maintenant trouvé que l'on pouvait réaliser une désoxygénation poussée de l'eau de mer, c'est-à-dire une élimination de l'oxygène dissous jusqu'à des teneurs inférieures à 50 ppb et notamment jusqu'à des teneurs de l'ordre de 10 ppb à 20 ppb, par hydrogénation catalytique en présence d'un catalyseur à base de platine sur un support granulaire de charbon actif, avec une excellente stabilité dans le temps du rendement de désoxygénation, lorsque le platine était présent, dans des conditions particulières de dispersion, dans une couche superficielle des granulés de charbon actif.

L'invention a donc pour objet un procédé de désoxygénation catalytique poussée d'eaux de provenances diverses et tout particulièrement d'eau de mer, dans lequel on fait passer l'eau à traiter en présence d'hydrogène au contact d'un catalyseur consistant en platine divisé associé à un support granulaire de charbon actif, ledit procédé se caractérisant en ce que le platine divisé du catalyseur est présent dans une couche superficielle des grains de support de charbon actif et en ce que la dispersion du platine dans les grains du catalyseur, définie comme étant le rapport du nombre d'atomes de platine en surface des grains au nombre total d'atomes de platine contenus dans lesdits grains, est au moins égale à 10 %.

Le nombre d'atomes de platine NA en surface des grains de catalyseur est déterminé par chimisorption d'oxygène et titrage de l'oxygène chimisorbé par l'hydrogène.

Le nombre total NT d'atomes de platine dans le catalyseur est déterminé à partir de la quantité de platine contenue dans ledit catalyseur.

La détermination du nombre d'atomes de platine NA en surface des grains de catalyseur fait appel à la chromatographie par impulsion et comporte le balayage d'un échantillon de catalyseur à l'aide d'un gaz vecteur, consistant par exemple en argon, dans lequel on injecte des doses (en anglais "pulses") d'oxygène (chimisorption d'oxygène) ou des doses ("pulses") d'hydrogène (titrage). On fait passer le flux gazeux recueilli après balayage du catalyseur, dans une colonne chromatographique remplie de tamis moléculaire 5A et équipée d'un détecteur du type catharomètre aux fins d'analyse quantitative des constituants dudit flux gazeux.

La détermination du nombre d'atomes de platine NA comporte les trois étapes ci-après :

. <u>Conditionnement du catalyseur</u> : Une quantité déterminée, par exemple 300 mg, d'un échantillon du catalyseur est dégazée sous argon, puis réduite sous hydrogène et enfin dégazée sous argon, chacune de ces trois phases étant réalisée à 500 °C pendant 2 heures.

. <u>Chimisorption d'oxygène</u> : La chimisorption d'oxygène obéit à l'équation $Z_A + \frac{1}{2} O_2 \rightarrow Z_A O$, où $Z_A$ représente un atome de platine en surface du catalyseur. Cette chimisorption d'oxygène est réalisée à température ambiante en balayant l'échantillon de catalyseur, conditionné comme indiqué ci-dessus, par un courant de gaz vecteur (argon) circulant avec un débit donné constant, par exemple 30 ml/minute, dans lequel on injecte des doses ("pulses") d'oxygène jusqu'à saturation des atomes $Z_A$.

. <u>Titrage de l'oxygène chimisorbé par l'hydrogène</u> : Après purge du catalyseur renfermant l'oxygène chimisorbé (OT) par les atomes $Z_A$, par balayage au moyen du gaz vecteur seul pendant une durée déterminée, par exemple 10 minutes, l'oxygène chimisorbé (OT) est titré par l'hydrogène (HT) à température ambiante, ledit hydrogène étant amené sous la forme de doses ("pulses") dans le gaz vecteur de balayage.

Le catalyseur subit plusieurs cycles de chimisorption d'oxygène et d'hydrogène.

Les quantités d'oxygène (OT) et d'hydrogène (HT) chimisorbées sont liées par la relation (HT) : (OT) = 2 et le nombre d'atomes de platine NA est donné par NA = 1/3 (HT) = 2/3 (OT).

La dispersion D (%) du platine dans le catalyseur est donnée par la relation $D(\%) = \frac{NA}{NT} \times 100$.

Selon l'invention, comme indiqué plus haut, la dispersion du platine dans le catalyseur de désoxygénation est d'au moins 10 %. Elle se situe plus particulièrement entre 10 % et 95 % et de préférence entre 12 % et 65 %.

La quantité totale de platine contenue dans le catalyseur peut être comprise entre 0,05 % et 5% et plus spécialement entre 0,1 % et 3 % en poids du catalyseur. De préférence ladite quantité totale de platine est comprise entre 0,1 % et 1,5 % en poids du catalyseur.

Le support granulaire de charbon actif, qui est associé au platine pour former le catalyseur utilisé dans le procédé selon l'invention, présente une surface spécifique, déterminée par application de la méthode B.E.T. d'adsorption d'azote, qui peut être comprise entre 10 $m^2$/g et 2000 $m^2$/g et se situe plus particulièrement entre 50 $m^2$/g et 1800 $m^2$/g.

Pour mettre en oeuvre le procédé selon l'invention de désoxygénation catalytique d'eaux de provenances diverses et tout particulièrement d'eau de mer, on dissout tout d'abord dans l'eau à désoxygéner une quantité d'hydrogène au moins égale à la quantité stoechiométrique nécessaire pour consommer l'oxygène dissous dans cette eau, puis on met en contact l'eau additionnée d'hydrogène avec le catalyseur à base de platine sur charbon actif pendant une durée suffisante pour effectuer la réaction $2H_2 + O_2 \rightarrow 2H_2O$ au contact dudit catalyseur et l'on évacue l'eau traitée après sa mise en contact avec le catalyseur, lesdites opérations étant réalisées en continu.

Avantageusement, l'eau à traiter est soumise à une étape de filtration, avant de lui ajouter l'hydrogène nécessaire à la désoxygénation.

Le procédé selon l'invention peut être mis en oeuvre à des températures comprises entre 0 °C et 60 °C et plus particulièrement entre 5 °C et 45 °C, les températures préférées correspondant à la température ambiante de l'eau à traiter ou étant proches de cette dernière.

Des pressions absolues comprises entre 1 et 10 bars et plus particulièrement allant de 1,5 à 4 bars peuvent être maintenues en amont de la zone de mise en contact du catalyseur de désoxygénation avec l'eau additionnée d'hydrogène.

Le débit de l'eau à désoxygéner additionnée d'hydrogène, que l'on amène au contact du catalyseur à base de platine sur charbon actif, est avantageusement compris entre 2 l et 100 l par heure et par litre de catalyseur et il se situe, de préférence, entre 5 l et 70 l par heure et par litre de catalyseur.

La quantité maximale d'oxygène contenue dans l'eau à désoxygéner varie en fonction de la température de l'eau à traiter et surtout de la pression à laquelle elle est soumise. Ainsi, dans le cas de l'eau de mer, à une température égale à 10 °C, ladite eau peut avoir une teneur en oxygène allant jusqu'à environ 11 ppm à la pression atmosphérique et jusqu'à environ 115 ppm sous une pression de 10 bars absolus.

La quantité d'hydrogène à dissoudre dans l'eau à désoxygéner représente au moins la quantité stoechiométrique nécessaire pour consommer la totalité de l'oxygène présent dans cette eau, c'est-à-dire pour réaliser la réaction $2H_2 + O_2 \rightarrow 2H_2O$. De préférence, la quantité d'hydrogène à dissoudre dans l'eau en vue de la réaction avec l'oxygène au contact du catalyseur est comprise entre 1 et 2 fois et de préférence entre 1 et 1,5 fois ladite quantité stoechiométrique. La dissolution de la quantité appropriée d'hydrogène dans l'eau à désoxygéner est obtenue en mettant en contact ladite eau avec un courant d'hydrogène sous une pression propre à correspondre à la dissolution recherchée, pression que l'on calcule par application des lois de la thermodynamique.

Le procédé selon l'invention pour la désoxygénation d'eaux de provenances diverses offre un intérêt tout particulier pour la désoxygénation de l'eau de mer dans les conditions d'exploitation couramment observées dans la production pétrolière, notamment la production en mer, où la robustesse et la fiabilité des installations sont des facteurs essentiels du choix des techniques à mettre en oeuvre, surtout si l'on se place dans la perspective d'éventuelles plates-formes marines inhabitées.

Le catalyseur à base de platine divisé sur support granulaire de charbon actif, qui est utilisé dans le procédé selon l'invention de désoxygénation d'eaux de provenances diverses et tout particulièrement d'eau de mer, peut être obtenu en faisant appel à toute méthode permettant de former le platine divisé dans une couche superficielle de chaque grain de support et d'obtenir une dispersion D du platine divisé dans les grains de catalyseur au moins égale à 10 % et avantageusement comprise entre 10 % et 95 % et de préférence entre 12 % et 65 %.

On peut en particulier obtenir ledit catalyseur en mettant en oeuvre les étapes suivantes :

- prétraitement d'un support granulaire de charbon actif, ayant une aire spécifique B.E.T. par adsorption d'azote comprise entre 10 $m^2$/g et 2000 $m^2$/g et plus particulièrement entre 50 $m^2$/g et 1800 m2/g, par un agent oxydant en phase aqueuse, si besoin est lavage à l'eau du support traité pour éliminer l'agent oxydant résiduel, puis séchage et calcination sous air du support traité, ladite calcination étant réalisée à température inférieure à 500 °C

- mise en contact, sous agitation, d'une suspension aqueuse du support prétraité calciné avec une solution, notamment aqueuse, d'un sel basique de platine en opérant dans un domaine de pH supérieur à 8, de préférence entre 8,5 et 12,5, puis séparation du catalyseur d'avec la phase aqueuse, lavage et séchage dudit catalyseur et ensuite calcination de ce catalyseur à des températures inférieures à 500 °C, et

- réduction du catalyseur par l'hydrogène en opérant à des températures entre 350 °C et 650 °C, de préférence entre 450 °C et 600 °C, pour former du platine divisé sur le support de charbon actif.

Avantageusement, l'agent oxydant consiste en acide nitrique 1N à 5N. De préférence, dans ce cas, le prétraitement du support granulaire de charbon actif est réalisé par chauffage à reflux de la suspension du support dans l'acide nitrique.

L'invention est illustrée par les exemples suivants donnés à titre non limitatif.

EXEMPLES 1 à 7

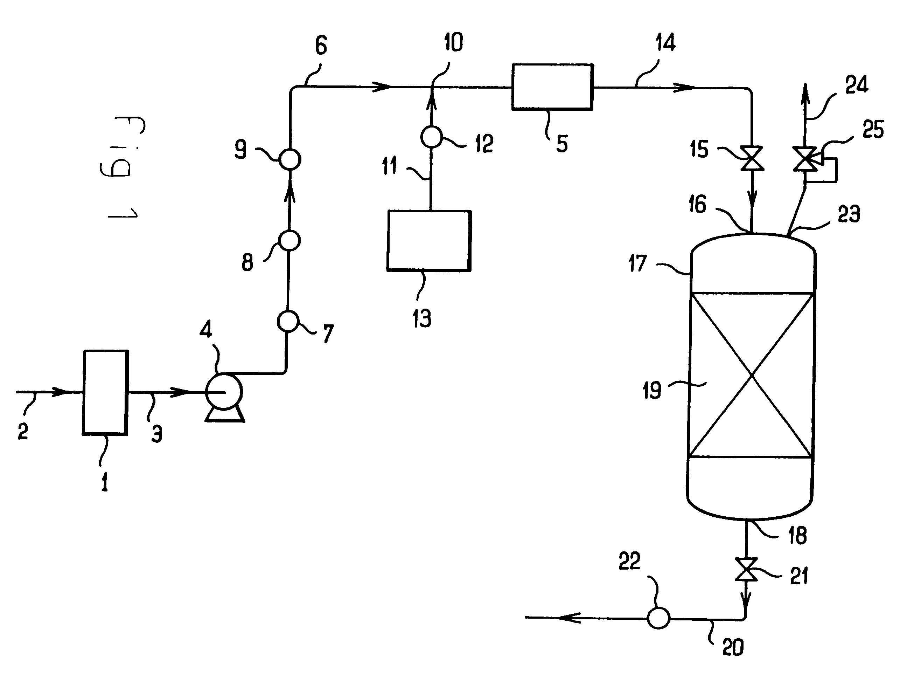

On réalisait des essais de désoxygénation d'eau de mer en utilisant une installation analogue à celle schématisée sur la figure du dessin annexé.

Cette installation comportait un filtre (1) muni d'un conduit d'entrée (2) pour l'eau de mer et d'un conduit de sortie (3) relié à l'aspiration d'une pompe (4). Le refoulement de cette pompe était connecté à l'entrée d'un mélangeur statique (5) par un conduit (6), sur lequel était monté un régulateur de température (7), un régulateur de débit (8), une sonde à oxygène (9) et un piquage (10) prolongé par une tubulure (11) pourvue d'un régulateur de débit (12) et reliant le conduit (3) à une source d'hydrogène (13). La sortie du mélangeur statique était connectée, par un conduit (14) sur lequel était monté une vanne (15), à l'entrée (16) d'un réacteur (17) de désoxygénation comportant une sortie (18) et dont l'entrée (16) et la sortie (18) étaient séparées par un lit fixe d'un catalyseur de désoxygénation (19). La sortie (18) du réacteur (17) était prolongée par un conduit (20) d'évacuation de l'eau de mer traitée, ledit conduit étant muni d'une vanne (21) et, en aval, d'une sonde à oxygène (22). Le réacteur de désoxygénation (17) comportait encore, en tête, une sortie (23) prolongée par une tubulure (24) sur laquelle était montée une vanne (25) de régulation de pression.

L'eau de mer à désoxygéner, arrivant en continu par le conduit (2) et filtrée dans le filtre (1), était délivrée, par la pompe (4), au mélangeur statique (5), avec une température contrôlée par le régulateur de température (7) et un débit maintenu constant par le régulateur de débit (8) et en ayant reçu, par le piquage (10), un flux d'hydrogène fourni par la source d'hydrogène (13) et contrôlé par le régulateur de débit (12). Après passage dans le mélangeur statique, qui facilite la dissolution de l'hydrogène dans l'eau de mer, le courant d'eau de mer à désoxygéner, qui renferme alors la quantité appropriée d'hydrogène dissous, était amené au réacteur (17), dans lequel l'oxygène et l'hydrogène présents dans l'eau de mer réagissent au contact du catalyseur (19) de désoxygénation pour former de l'eau selon la réaction $2H_2 + O_2 \rightarrow 2H_2O$. L'eau de mer traitée était évacuée en continu du réacteur (17) par la conduite (20). La sonde à oxygène (9) permet de doser en continu la quantité d'oxygène de l'eau de mer à désoxygéner et la sonde à oxygène (22) permet de mesurer en continu la teneur résiduelle de l'eau de mer traitée.

Les exemples 1 à 4 sont des exemples réalisés selon l'invention tandis que les exemples 5 à 7 sont des exemples témoins.

Les catalyseurs utilisés dans les différents exemples étaient les suivants :

- Exemples 1 à 4 (suivant l'invention) : catalyseurs renfermant 1 % en poids de platine divisé déposé dans une couche superficielle des granules d'un support granulaire de charbon actif ayant une aire spécifique B.E.T. par adsorption d'azote égale à 1200 $m^2/g$ (exemple 1), 1560 $m^2/g$ (exemples 2 et 3) et 1200 $m^2/g$ (exemple 4), la dispersion D du platine pour ces catalyseurs ayant les valeurs 14 % (exemple 1), 25 % (exemple 2), 30 % (exemple 3) et 53 % (exemple 4).

- Exemple 5 (témoin) : catalyseur commercial renfermant 1 % en poids de platine déposé à partir d'une imprégnation conventionnelle d'un support de charbon actif par un sel de platine, le support ayant une aire B.E.T par adsorption d'azote égale à 1200 $m^2/g$, la dispersion D du platine pour ce catalyseur étant égale à 6,3 %.

- Exemple 6 (témoin) : catalyseur commercial renfermant 1 % en poids de palladium sur un support de charbon actif ayant une aire spécifique B.E.T. par adsorption d'azote égale à 1320 $m^2/g$, la dispersion D du palladium pour ce catalyseur étant égale à 10 %.

- Exemple 7 (témoin) : catalyseur renfermant 1 % en poids de palladium déposé en couche superficielle des granules d'un support granulaire de charbon actif d'aire spécifique B.E.T. par adsorption d'azote égale à 1200 $m^2/g$, la dispersion D du palladium pour ce catalyseur étant égale à 24 %.

Préparation des catalyseurs des exemptes 1 à 4

Une dispersion du support granulaire de charbon actif choisi dans l'acide nitrique 1,5 N était portée à reflux pendant 2 heures. Après filtration, le solide était lavé à l'eau jusqu'à neutralité, puis séché à 100 °C et ensuite calciné à 300 °C sous air pendant 2 heures.

A une suspension aqueuse du charbon actif calciné issu du traitement à l'acide nitrique, maintenue sous agitation, on ajoutait progressivement une quantité contrôlée d'une solution de dinitrodiaminoplatine pour obtenir 1 % en poids de platine dans le catalyseur. A l'issue de cette addition, l'agitation était maintenue pendant 4 heures, puis le solide était conservé dans la phase liquide sous agitation pendant 8 heures. Le catalyseur était alors filtré, lavé, séché sous azote, puis calciné sous air à 200°C, le catalyseur calciné étant refroidi jusqu'à température ambiante et purgé sous azote pendant 15 minutes.

Le catalyseur purgé était alors réduit par l'hydrogène à 500 °C pendant 2 heures, en utilisant 600 l d'hydrogène par litre de catalyseur et par heure.

- Préparation du catalyseur de l'exemple 7 : Le support granulaire de charbon actif était placé dans un récipient et immergé dans l'eau distillée. Après addition de la quantité contrôlée de chlorure de palladium au contenu du récipient pour obtenir 1 % en poids de palladium dans le catalyseur, on évaporait lentement, sous agitation, au bain de sable jusqu'à l'obtention d'une poudre sèche. Le catalyseur était ensuite séché à l'étuve à 120 °C pendant 12 heures.

Le catalyseur séché était ensuite calciné sous air à 200 °C pendant 2 heures, puis réduit par l'hydrogène à 500 °C pendant 2 heures.

Conditions opératoires pour la réalisation des essais de désoxygénation

- . débit de l'eau de mer          30 l/h
- . teneur en oxygène de l'eau de mer          8 ppm
- . température de l'eau de mer tout au long du circuit de désoxygénation          15 °C
- . débit d'hydrogène (stoechiométrie + 20 %)          430 ml/h
- . pression en amont du réacteur          2 bars

Pour simuler l'action d'une longue durée de mise en oeuvre du procédé sur l'activité du catalyseur, on réalisait également des essais de désoxygénation après avoir soumis le catalyseur à un vieillissement accéléré.

Procédure de vieillissement du catalyseur

Le catalyseur était mis en suspension dans de l'eau de mer sous bullage d'air. Après une semaine de vieillissement dans ces conditions, le catalyseur était filtré et séché.

Les résultats obtenus au cours des divers essais sont rassemblés dans le tableau ci-après.

TABLEAU

| Exemples | Quantité d'oxygène consommée par la réaction $2H_2 + O_2 \rightarrow 2H_2O$ (g par heure et g de catalyseur) | |
|---|---|---|
| | Catalyseur non vieilli | Catalyseur vieilli |
| 1 | $4,4 \times 10^{-2}$ | $4,0 \times 10^{-2}$ |
| 2 | $5,1 \times 10^{-2}$ | $5,0 \times 10^{-2}$ |
| 3 | $5,7 \times 10^{-2}$ | $6,0 \times 10^{-2}$ |
| 4 | $6,2 \times 10^{-2}$ | $5,7 \times 10^{-2}$ |
| 5 (témoin) | $1,9 \times 10^{-2}$ | $2,1 \times 10^{-2}$ |
| 6 (témoin) | $1,8 \times 10^{-2}$ | $0,6 \times 10^{-2}$ |
| 7 (témoin) (témoin) | $2,7 \times 10^{-2}$ | $1,2 \times 10^{-2}$ |

Au vu des résultats du tableau, il apparaît que les catalyseurs témoins à base de palladium sur charbon actif (exemples 5 et 6) ont, dès le départ, des activités nettement plus faibles que les catalyseurs utilisés selon l'invention et que ces activités sont encore réduites par un facteur d'environ 2 pour les catalyseurs vieillis, ce qui indique que ces catalyseurs au palladium sur charbon actif ne sont pas stables dans le temps en présence de l'eau de mer.

Le catalyseur témoin à base de platine sur charbon actif (exemple 5), pour lequel la dispersion du platine D est inférieure à 10 % (D = 6,3 %), est stable au vieillissement, mais son activité est substantiellement inférieure à celle des catalyseurs selon l'invention.

Les catalyseurs selon l'invention (exemples 1 à 4), qui renferment le platine dans une couche superficielle des grains de charbon actif et pour lesquels la dispersion D du platine est supérieure à 10 % et plus particulièrement comprise entre 12 % et 55 %, présentent une activité élevée et stable après vieillissement pour la réduction de l'oxygène par l'hydrogène.

EXEMPLE 8

On opérait dans des conditions semblables à celles de l'exemple 1 en utilisant 1 kg de catalyseur.

Les résultats obtenus au cours d'une période de 800 heures de fonctionnement continu de l'installation montrent un taux de désoxygénation très élevé, à savoir environ 99,99 %, ce qui conduisait à une production stable d'eau de mer désoxygénée renfermant environ 1 ppb d'oxygène résiduel.

Le taux de désoxygénation est donné par le rapport : $\frac{Ce - Cs}{Ce} \times 100$, où Ce et Cs sont respectivement les concentrations en oxygène de l'eau de mer non traitée et traitée déterminées à l'aide des sondes à oxygène 9 et 22.

EP 0 697 999 B1

**Revendications**

1. Procédé de désoxygénation catalytique poussée d'eaux de provenances diverses et tout particulièrement d'eau de mer, dans lequel on fait passer l'eau à traiter en présence d'hydrogène au contact d'un catalyseur consistant en platine divisé associé à un support granulaire de charbon actif, ledit procédé se caractérisant en ce que le platine divisé du catalyseur est présent dans une couche superficielle des grains de support de charbon actif et en ce que la dispersion du platine dans les grains de catalyseur, définie comme étant le rapport du nombre d'atomes de platine en surface des grains au nombre total d'atomes de platine contenus dans lesdits grains, est au moins égale à 10 %.

2. Procédé selon la revendication 1, caractérisé en ce que la dispersion du platine dans les grains de catalyseur est comprise entre 10 % et 95 % et plus particulièrement entre 12 % et 65 %.

3. Procédé selon la revendication 1 ou 2, caractérisé en ce que la quantité totale de platine contenue dans le catalyseur est comprise entre 0,05 % et 5 % et plus particulièrement entre 0,1 % et 3 % en poids du catalyseur.

4. Procédé selon la revendication 1 ou 2, caractérisé en ce que la quantité totale de platine contenue dans le catalyseur est comprise entre 0,1 % % et 1,5 % en poids du catalyseur.

5. Procédé selon l'une des revendications 1 à 4, caractérisé en ce que le support granulaire de charbon actif, qui est associé au platine pour former le catalyseur de désoxygénation, présente une surface spécifique, déterminée par application de la méthode B.E.T. d'adsorption d'azote, comprise entre 10 m$^2$/g et 2000 m$^2$/g et plus particulièrement entre 50 m$^2$/g et 1800 m$^2$/g.

6. Procédé selon l'une des revendications 1 à 5, caractérisé en ce que, pour le mettre en oeuvre, on dissout tout d'abord dans l'eau à désoxygéner une quantité d'hydrogène au moins égale à la quantité stoechiométrique nécessaire pour consommer l'oxygène dissous dans cette eau, puis on met l'eau additionnée d'hydrogène en contact avec le catalyseur à base de platine sur charbon actif pendant une durée suffisante pour effectuer la réaction $2H_2 + O_2 \rightarrow 2H_2O$ au contact dudit catalyseur et l'on évacue l'eau traitée après sa mise en contact avec le catalyseur, lesdites opérations étant réalisées en continu.

7. Procédé selon la revendication 6, caractérisé en ce que l'on soumet l'eau à traiter à une filtration avant de lui ajouter l'hydrogène nécessaire à la désoxygénation.

8. Procédé selon l'une des revendications 1 à 7, caractérisé en ce qu'il est mis en oeuvre à des températures comprises entre 0 °C et 60 °C et plus particulièrement entre 5 °C et 45 °C.

9. Procédé selon la revendication 8, caractérisé en ce que lesdites températures de mise en oeuvre correspondent à la température ambiante de l'eau à traiter ou sont proches de cette température.

10. Procédé selon l'une des revendications 6 à 9, caractérisé en ce que les pressions absolues en amont de la zone de mise en contact du catalyseur de désoxygénation avec l'eau additionnée d'hydrogène sont maintenues entre 1 et 10 bars et plus particulièrement vont de 1,5 à 4 bars.

11. Procédé selon l'une des revendications 6 à 10, caractérisé en ce que le débit de l'eau à désoxygéner additionnée d'hydrogène, que l'on amène au contact du catalyseur, est compris entre 2 l et 100 l et de préférence entre 5 1 et 70 1 par heure et par litre de catalyseur.

12. Procédé selon l'une des revendications 6 à 11, caractérisé en ce que la quantité d'hydrogène que l'on dissout dans l'eau à désoxygéner est comprise entre 1 et 2 fois et de préférence entre 1 et 1,5 fois la quantité stoechiométrique nécessaire pour consommer la totalité de l'oxygène présent dans cette eau.

13. Procédé selon la revendication 5, caractérisé en ce que le catalyseur de désoxygénation résulte de la mise en oeuvre des étapes suivantes :

   - prétraitement du support granulaire de charbon actif, par un agent oxydant en phase aqueuse, notamment acide nitrique 1N à 5N,si besoin est lavage à l'eau du support traité pour éliminer l'agent oxydant résiduel, puis séchage et ensuite calcination sous air du support traité, ladite calcination étant réalisée à température inférieure à 500 °C ;

- mise en contact, sous agitation, d'une suspension aqueuse du support prétraité calciné avec une solution, notamment aqueuse, d'un sel basique de platine en opérant dans un domaine de pH supérieur à 8, de préférence entre 8,5 et 12,5, puis séparation du catalyseur d'avec la phase aqueuse, lavage et séchage dudit catalyseur et ensuite calcination de ce catalyseur à des températures inférieures à 500 °C, et

- réduction du catalyseur par l'hydrogène, en opérant à des températures comprises entre 350 °C et 650 °C et de préférence entre 450 °C et 600 °C, pour former du platine divisé sur le support de charbon actif.

**Patentansprüche**

1. Verfahren zur weitgehenden katalytischen Desoxygenierung von Wässern unterschiedlicher Herkunft und insbesondere von Meerwasser, bei dem man das zu behandelnde Wasser in Anwesenheit von Wasserstoff mit einem Katalysator in Berührung bringt, der aus mit einem körnigen Träger aus Aktivkohle verbundenen feinverteilten Platin besteht, dadurch **gekennzeichnet**, daß das feinverteilte Platin des Katalysators in einer oberflächlichen Schicht der Körner des Aktivkohleträgers angeordnet ist und die Verteilung des Platins in den Katalysatorkörnern, definiert als Verhältnis der Zahl der Platinatome in der Oberfläche der Körner zur Gesamtzahl an in den Körnern enthaltenen Platinatome, wenigstens 10 % beträgt.

2. Verfahren nach Anspruch 1, dadurch **gekennzeichnet**, daß die Verteilung des Platins in den Katalysatorkörnern 10 bis 95 % und insbesondere 12 bis 65 % beträgt.

3. Verfahren nach Anspruch 1 oder 2, dadurch **gekennzeichnet**, daß die Gesamtmenge an im Katalysator enthaltenem Platin 0,05 bis 5 % und insbesondere 0,1 bis 3 %, bezogen auf das Gewicht des Katalysators, beträgt.

4. Verfahren nach Anspruch 1 oder 2, dadurch **gekennzeichnet**, daß die Gesamtmenge an im Katalysator enthaltenem Platin 0,1 bis 1,5 %, bezogen auf das Gewicht des Katalysators, beträgt.

5. Verfahren nach einem der Ansprüche 1 bis 4, dadurch **gekennzeichnet**, daß der körnige Aktivkohleträger, der mit dem Platin verbunden ist, um den Desoxygenierungskatalysator zu bilden, eine spezifische Oberfläche, ermittelt nach der BET-Methode der Stickstoffadsorption von 10 bis 2000 $m^2/g$ und insbesondere 50 bis 1800 $m^2/g$ aufweist.

6. Verfahren nach einem der Ansprüche 1 bis 5, dadurch **gekennzeichnet**, daß man zu seiner Durchführung zuerst im zu desoxygenierenden Wasser eine Menge Wasserstoff löst, die zumindest der stöchiometrischen Menge entspricht, die für den Verbrauch des im Wasser gelösten Sauerstoffs erforderlich ist, dann das mit Wasserstoff versetzte Wasser mit dem Platinkatalysator auf Aktivkohle während einer Zeitdauer in Berührung bringt, die für die Durchführung der Reaktion $2H_2 + O_2 \rightarrow 2H_2O$ im Kontakt mit dem Katalysator ausreicht, und dann das behandelte Wasser nach seiner Kontaktierung mit dem Katalysator ableitet, wobei die einzelnen Arbeitsgänge kontinuierlich durchgeführt werden.

7. Verfahren nach Anspruch 6, dadurch **gekennzeichnet**, daß man das zu behandelnde Wasser vor der Zugabe des für die Desoxygenierung erforderlichen Wasserstoffs filtriert.

8. Verfahren nach einem der Ansprüche 1 bis 7, dadurch **gekennzeichnet**, daß es bei Temperaturen von 0 bis 60°C und insbesondere von 5 bis 45°C durchgeführt wird.

9. Verfahren nach Anspruch 8, dadurch **gekennzeichnet**, daß die Betriebstemperaturen der Umgebungstemperatur des zu behandelnden Wassers entsprechen oder an diese nahe herankommen.

10. Verfahren nach einem der Ansprüche 6 bis 9, dadurch **gekennzeichnet**, daß die absoluten Drücke oberhalb der Zone der Kontaktierung des Desoxygenierungskatalysators mit dem mit Wasserstoff versetzten Wasser zwischen 1 und 10 bar und insbesondere zwischen 1,5 und 4 bar gehalten werden.

11. Verfahren nach einem der Ansprüche 6 bis 10, dadurch **gekennzeichnet**, daß der Durchsatz an zu desoxygenierendem, mit Wasserstoff versetztem Wasser, das man mit dem Katalysator in Berührung bringt, 2 bis 100 1 und vorzugsweise 5 bis 70 1 pro Stunde und Liter Katalysator beträgt.

12. Verfahren nach einem der Ansprüche 6 bis 11, dadurch **gekennzeichnet**, daß die Menge an Wasserstoff, den man in dem zu deoxygenierendem Wasser löst, der 1- bis 2fachen und vorzugsweise der 1- bis 1,5fachen stöchiometrischen Menge entspricht, die für den Verbrauch des gesamten in diesem Wasser vorliegenden Sauerstoffs erforderlich ist.

13. Verfahren nach Anspruch 5, dadurch **gekennzeichnet**, daß man den Desoxygenierungskatalysator durch Durchführung der folgenden Stufen erhält:

Vorbehandlung des körnigen Aktivkohleträgers mit einem Oxidationsmittel in wäßriger Phase, insbesondere mit 1 bis 5 N Salpetersäure, gegebenenfalls unter nachfolgendem Waschen des behandelten Trägers mit Wasser zur Entfernung des restlichen Oxidationsmittels, nachfolgendes Trocknen und schließlich Glühen des behandelten Trägers an der Luft, wobei das Glühen bei einer Temperatur von unter 500°C durchgeführt wird,

Kontaktierung einer wäßrigen Suspension des geglühten vorbehandelten Trägers unter Rühren mit einer Lösung, insbesondere einer wäßrigen, eines basischen Platinsalzes in einem pH-Bereich von über 8 und vorzugsweise zwischen 8,5 und 12,5, nachfolgende Abtrennung aus der wäßrigen Phase, Waschen und Trocknen des Katalysators und schließlich Glühen des Katalysators bei Temperaturen von unter 500°C und

Reduktion des Katalysators durch Wasserstoff bei Temperaturen zwischen 350 und 650°C, vorzugsweise zwischen 450 und 600°C, zur Bildung des auf dem Aktivkohleträger fein verteilten Platins.

## Claims

1. Process for the extensive catalytic deoxygenation of waters of various origins and very especially sea water, in which the water to be treated is brought, in the presence of hydrogen, into contact with a catalyst comprising divided platinum associated with a granular support of activated carbon, the process being characterised in that the divided platinum of the catalyst is present in a surface layer of the activated carbon support grains and in that the dispersion of the platinum in the catalyst grains, defined as being the ratio of the number of platinum atoms on the surface of the grains to the total number of platinum atoms contained in the grains, is at least equal to 10%.

2. Process according to claim 1, characterised in that the dispersion of the platinum in the catalyst grains is between 10% and 95% and more especially between 12% and 65%.

3. Process according to claim 1 or 2, characterised in that the total amount of platinum contained in the catalyst is between 0.05% and 5% and more especially between 0.1% and 3% by weight of the catalyst.

4. Process according to claim 1 or 2, characterised in that the total amount of platinum contained in the catalyst is between 0.1% and 1.5% by weight of the catalyst.

5. Process according to any one of claims 1 to 4, characterised in that the activated carbon granular support, which is associated with the platinum to form the deoxygenation catalyst, has a specific surface area, determined by applying the B.E.T. method of nitrogen adsorption, of between 10 $m^2$/g and 2000 $m^2$/g and more especially between 50 $m^2$/g and 1800 $m^2$/g.

6. Process according to any one of claims 1 to 5, characterised in that, in order to implement it, there is first dissolved in the water to be deoxygenated an amount of hydrogen at least equal to the stoichiometric amount necessary to consume the oxygen dissolved in the water, then the water to which hydrogen has been added is brought into contact with the catalyst based on platinum on activated carbon for a time sufficient to effect the reaction $2H_2 + O_2 \rightarrow 2H_2O$ in contact with the catalyst, and the treated water is evacuated after it has been brought into contact with the catalyst, the operations being carried out continuously.

7. Process according to claim 6, characterised in that the water to be treated is subjected to filtration before the hydrogen necessary for deoxygenation is added to it.

8. Process according to any one of claims 1 to 7, characterised in that it is implemented at temperatures between 0°C and 60°C and more especially between 5°C and 45°C.

9. Process according to claim 8, characterised in that the implementing temperatures correspond to the ambient temperature of the water to be treated or are close to that temperature.

10. Process according to any one of claims 6 to 9, characterised in that the absolute pressures upstream of the region where the deoxygenation catalyst is brought into contact with the water to which hydrogen has been added are maintained between 1 and 10 bar and more especially range from 1.5 to 4 bar.

11. Process according to any one of claims 6 to 10, characterised in that the flow rate of the water to be deoxygenated to which hydrogen has been added and which is brought into contact with the catalyst is between 2 1 and 100 1 and preferably between 5 l and 70 l per hour and per litre of catalyst.

12. Process according to any one of claims 6 to 11, characterised in that the amount of hydrogen dissolved in the water to be deoxygenated is between 1 and 2 times and preferably between 1 and 1.5 times the stoichiometric amount necessary to consume all of the oxygen present in the water.

13. Process according to claim 5, characterised in that the deoxygenation catalyst results from carrying out the following steps:

- pretreating the activated carbon granular support using an oxidising agent in aqueous phase, especially 1N to 5N nitric acid, if necessary washing the treated support with water in order to eliminate the residual oxidising agent, then drying and subsequently calcining the treated support in air, the calcination being carried out at a temperature lower than 500°C;
- bringing an aqueous suspension of the calcined pretreated support into contact with a solution, especially an aqueous solution, of a basic platinum salt while agitating and operating in a pH range higher than 8, preferably between 8.5 and 12.5, then separating the catalyst from the aqueous phase, washing and drying the catalyst and then calcining the catalyst at temperatures lower than 500°C, and
- reducing the catalyst by means of the hydrogen, operating at temperatures between 350°C and 650°C and preferably between 450°C and 600°C, to form divided platinum on the activated carbon support.

Fig 1